# EUROPEAN PATENT APPLICATION

(11) **EP 2 040 139 A1**
(43) Date of publication of application: **25.03.2009**
(21) Application number: 07721583.8
(22) Date of filing: 28.06.2007
(51) Int. Cl.: G05G 1/015

(54) **CODE WHEEL ELECTRIC LOCATING DEVICE**

(71) Applicant: Kelamayi King-bull Infortec Industry Control Company Ltd., Xinjiang 834000 (CN)
(72) Inventor: WAN, Mingmin, Kalamayi, Xinjiang 834000 (CN); FU, Yong, Kalamayi, Xinjiang 834000 (CN); YAO, Jianshe, Kalamayi, Xinjiang 834000 (CN)
(74) Representative: Grünecker, Kinkeldey, Stockmair & Schwanhäusser Anwaltssozietät
(86) International application number: PCT/CN2007/002012
(87) International publication number: WO 2009/000112

(57) **Abstract**

The present invention is an electronic system which can select high-precision positions by an electronic code disk position selecting device. The device includes an active spindle (1), a code disk (2), a circuit board (4), photoelectric coupling tubes (3) formed on the circuit board, a circuit board support (5), a bolt (6) for fixing the code disk and the active spindle, and a bolt (7) for fixing the circuit board support, wherein graduation slots are formed on the mechanical code disk, an electronic unit is formed on the circuit board for collecting position signals and controlling the code disk, and the photoelectric coupling tubes receive the information at different graduation slots of the rotating mechanical code disk to determine each of the collected positions. Optical signals collected by the photoelectric coupling tubes are converted into electric signals directly, and then input to a programmable controller for deciding which position is to be selected in association with a predefined code. Thus, the obtained data are the accurate position data at any time. The present invention is an electronic high-precision code disk position selecting device, with a lower cost, precise position selecting and a longer service life, and can be used for selecting the circumferential positions of a multi-port valve and a multi-turn valve.

## Description

### Technical Field

The present invention relates to an electronic system, more particularly, an electronic code disk position selecting device capable of selecting positions accurately.

### Background Art

Previous mechanical position selecting devices can no longer meet the demand of automatic control due to poor reliability and short service lives. With the development of science and technology, accurate position selecting by an electronic code disk device is materialized.

An object of the present invention is to provide an electronic code disk position selecting device with a lower cost, precise position selecting and a longer service life which can be used for selecting the circumferential positions of a multi-port valve and a multi-turn valve.

### Summary of the Invention

An object of the present invention is to design and manufacture an electronic code disk position selecting device capable of overcoming the short-comings and defects of the prior art, which includes a mechanical code disk with graduation slots and an electronic unit for collecting position signals and controlling the code disk.

The electronic code disk position selecting device according to the present invention includes a mechanical code disk with graduation slots and an electronic unit for collecting position signals and controlling the code disk. The photoelectric coupling tubes receive the information at different graduation slots of the rotating mechanical code disk to determine each of the collected positions. Optical signals collected by the photoelectric coupling tubes are converted into electric signals directly, and then input to a programmable controller for deciding which position is to be selected in association with a predefined code. Thus, the obtained data are the accurate position data at any time.

The present invention is realized as the followings: at most three positions as 01, 10 and 11 can be obtained when coding by 2² binary and dividing the circumference of a code disk evenly by 120° each, the code disk is formed with two layers and thus a plurality of combinations can be obtained; at most seven positions as 001, 010, 011, 100, 101, 110 and 111 can be obtained when coding by 2³ binary and dividing the circumference of a code disk evenly into seven positions with each having 51°25'42", the code disk is formed with three layers and thus a plurality of combinations can be obtained; at most fifteen positions as 0001, 0010, 0011, 0100, 0101, 0110, 0111, 1000, 1001, 1010, 1011, 1100, 1101, 1110 and 1111 can be obtained when coding by 2⁴ binary and dividing the circumference of a code disk evenly by 24° each, the code disk is formed with four layers and thus a plurality of combinations can be obtained. And the rest can be inferred.

### Brief Description of the Drawings

FIG. 1 is a structural schematic drawing of the electronic code disk position selecting device of the present invention;
FIG. 2 is a schematic drawing of the four layers of the code disk unwound from the outer circumferences of the present invention;
FIG. 3 is a top view of the first layer of the code disk of the present invention; and
FIG. 4 is a schematic drawing of the electronic circuit of the present invention.

### Preferred Embodiment of the Invention

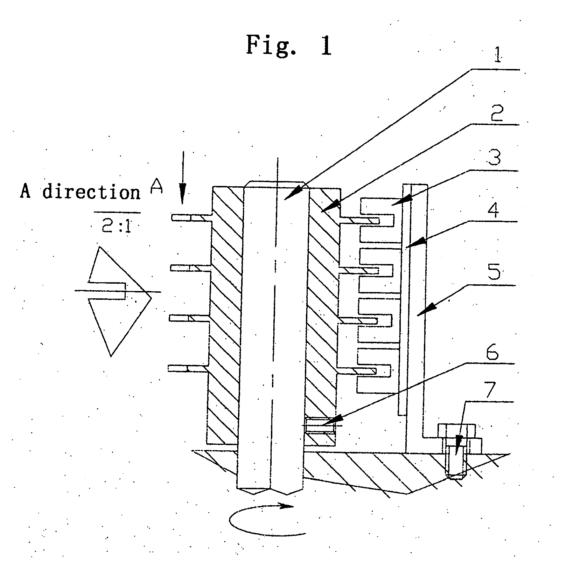

Take the ordinal encoding of the fifteen positions of the code disk having four layers as an example of this invention, which will be described in detail with reference to the accompanying drawings Fig.1 to Fig.4.

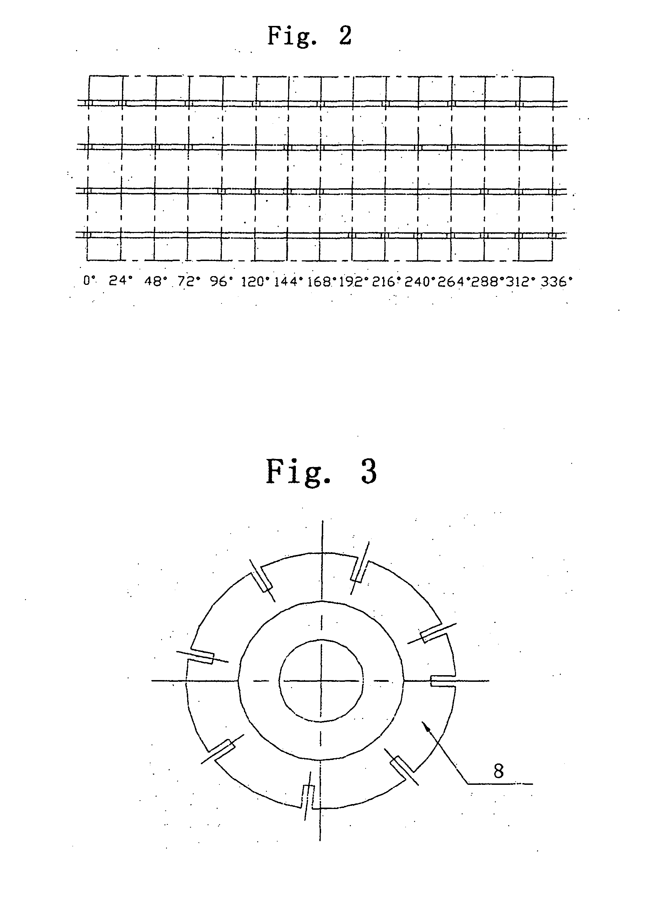

The structure of the electronic code disk position selecting device of the present invention is shown in FIG. 1. The device includes an active spindle 1, a code disk 2, a circuit board 4, a photoelectric coupling tube 3 formed on the circuit board 4, a circuit board support 5, a bolt 6 for fixing the code disk and the active spindle, and a bolt 7 for fixing the circuit board support 5. FIG. 2 shows the code disk of the present invention which has fifteen positions encoded sequentially by even graduation on the four layers. FIG. 3 is a top view of the first layer of the code disk.

The working process is as follows: let's take the position 1111 as an example, when the general programmable controller receives a control instruction as signal 1111, the motor is started to rotate the active spindle and the code disk by a transmission belt, and the position signals collected by the four photoelectric coupling tubes are compared with the predefined signal 1111. When the signal 1111 appears on the code disk, the general programmable controller will send an instruction to stop the motor.

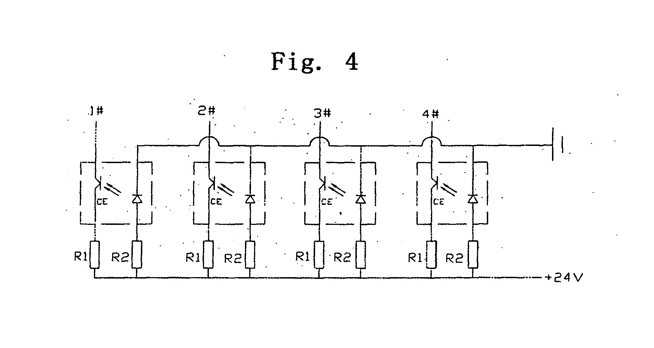

Referring to FIG. 4, the working principle of the electronic circuit is as follows: when the photoelectric coupling tubes are turned on, the output voltage from the terminals 1#, 2#, 3# and 4# is +24V. When the photoelectric coupling tubes are turned off, the output voltage from the terminals 1#, 2#,3# and 4# is 0V. Thus, the collected electric signals are sent to the programmable controller for deciding which position is to be selected in association with the predefined code.

## Claims

1. An electronic code disk position selecting device, comprising: an active spindle (1), a code disk (2), a circuit board (4), photoelectric coupling tubes (3) formed on the circuit board, a circuit board support (5), a bolt (6) for fixing the code disk and the active spindle, and a bolt (7) for fixing the circuit board support, wherein graduation slots are formed on the mechanical code disk, an electronic unit is formed on the circuit board for collecting position signals and controlling the code disk, and the photoelectric coupling tubes receive the information at different graduation slots of the rotating mechanical code disk to determine each of the collected positions, optical signals collected by the photoelectric coupling tubes are converted into electric signals directly, and then input to a programmable controller for deciding which position is to be selected in association with a predefined code.
